# EUROPÄISCHE PATENTSCHRIFT

(11) **EP 0 628 503 B1**
(45) Veröffentlichungstag und Bekanntmachung des Hinweises auf die Patenterteilung: **09.10.1996**
(21) Anmeldenummer: 94107682.0
(22) Anmeldetag: 18.05.1994
(51) Int. Cl.: B65G 69/28

(54) **Überladebrücke für Rampen**
Loading bridge for ramps
Pont de chargement pour rampes

(30) Priorität: 11.06.1993 DE 4319309
(43) Veröffentlichungstag der Anmeldung: 14.12.1994
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- DE-U- 8 806 449
- GB-A- 1 212 112
- US-A- 2 714 735

## Beschreibung

Die Erfindung geht aus von einer Überladebrücke für Rampen mit einer rampenseitig um eine Waagerechte Achse verschwenkbaren Brückenplatte und einer am freien Ende der Brückenplatte ein- und ausfahrbar bzw. ein- und ausklappbar angeordneten Verlängerung zur Abstützung auf der zu be- bzw. entladenden Plattform, wobei die Brückenplatte an ihrem rampenseitigen Ende zur Bildung einer Gelenkstelle mit einer oder mehreren Laschen versehen ist, deren Auge einen die waagerechte Achse bildenden, an der Rampe gelagerten Bolzen umschliesst (siehe zum Beispiel die DE-U-8 806 449).

Bei den bekannten Überladebrücken dieser Ausführung wird die Lasche vor der Montage der Brückenplatte an der Rampe mit der Brückenplatte fest verbunden. Die Montage erfolgt dann durch Anbringung des die Anlenkstelle bestimmenden Bolzens.

Der Erfindung liegt die Aufgabe zugrunde, die eingangs erwähnten Überladebrücken so einzurichten, dass eine einfache Montage der Brückenplatte auch dann noch erfolgen kann, wenn die zur Anlenkung der Brückenplatte erforderlichen Elemente, und zwar der Bolzen bereits mit der Rampe und die vorerwähnte Lasche schon mit dem Bolzen verbunden sind.

Zur Lösung dieser Aufgabe ist den Laschen eine lösbare Sperre zugeordnet, mit der die Laschen für die Zeit der Montage in einer zumindest im wesentlichen waagerechten Stellung arretierbar sind. Zweckmässigerweise wird ferner an der Brückenplatte eine rampenseitig offene, taschenartige Aufnahme für die Laschen vorgesehen; zudem ist es vorteilhaft die Laschen rampenseitig an der Unterseite mit einem ggfs. gebogenen Vorsprung auszustatten, der sich in der Arretierstellung der Laschen an einem entfernbaren Stab abstützt, welcher seinerseits an der Rampe anliegt.

Die Erfindung geht von der Überlegung aus, dass es nicht immer zweckmässig oder möglich ist, die Brückenplatte zusammen mit ihren zur Bildung der Gelenkstelle notwendigen Elementen an der Rampe zu montieren, und es vielmehr wünschenswert ist, zunächst nur den die Brückenplatte umschliessenden Stahlrahmen an der Rampe z.B. durch Einbetonieren zu befestigen, wobei sich jedoch Schwierigkeiten im Hinbick auf eine Justierung der Brückenplatte ergeben können.

In Verfolg des Erfindungsgedankens ist es jedoch möglich, die Brückenplatte unabhängig von ihren zur Brückenlenkung erforderlichen Elementen zu handhaben und sie zum Zwecke der Montage an die Lasche bzw. die Laschen - meist kommen zwei Laschen in Betracht - heranzuführen, um dann die Brückenplatte mit den Laschen zu verbinden. Dies kann durch Anschrauben oder ähnliche Mittel herbeigeführt werden, und zwar mit dem grossen Vorteil, dass vor einer Befestigung an den Laschen eine Brückenjustierung in Brückenlängs- und/oder Brückenquerrichtung stattfinden kann. Die erwähnte taschenartige Aufnahme an der Brückenplatte erleichtert dabei die Montage; nach Vollendung dieser Arbeiten kann dann der erwähnte Stab entfernt werden, und nunmehr ist die justierte Brückenplatte gebrauchsfertig.

Weitere Einzelheiten der Erfindung werden anhand der Zeichnung erläutert, in der ein Ausführungsbeispiel der Erfindung dargestellt ist.

Es zeigen :

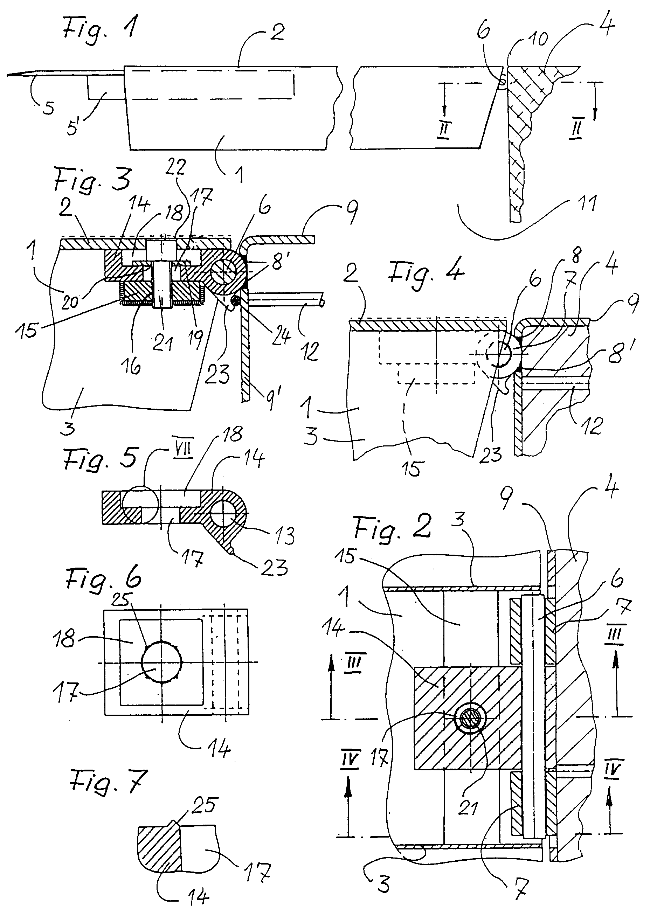

Fig. 1 eine Überladebrücke für Rampen in der Seitenansicht,
Fig. 2 einen Schnitt nach der Linie II - II von Fig. 1,
Fig. 3 einen Schnitt nach der Linie III - III von Fig. 2,
Fig. 4 einen Schnitt nach der Linie IV - IV von Fig. 2,
Fig. 5 ein Einzelteil der Überladebrücke, nämlich eine Lasche im Längsschnitt,
Fig. 6 die Lasche gemäss Fig. 5 in der Draufsicht und
Fig. 7 eine Einzelheit aus Fig. 5 im Bereich des Kreises VII.

Die Brückenplatte 1 mit einem Deckblech 2 und längs verlaufenden Unterzügen 3 hat an ihrem freien, der Rampe 4 abgekehrten Ende eine ein- und ausfahrbare Verlängerung 5 auf einem Schlitten 5', die zur Abstützung der Brückenplatte 1 auf dem andockenden, zu be- bzw. entladenden Fahrzeug dient. Am hinteren, rampenseitigen Ende ist die Brückenplatte 1 um eine Querachse verschwenkbar angeordnet, die von zwei über die Brückenbreite verteilten, fluchtenden Bolzen 6 gebildet wird.

Die Enden der Bolzen 6 sind in Hülsen 7 gelagert, welche in kleine Fenster 8 der Brückeneinfassung 9 eingreifen und dort durch Schweissungen 8' fest gelagert sind. Die Brückeneinfassung 9, die den die Brückenplatte 1 umschliessenden Rand 1o der sich unterhalb der Brückenplatte 1 befindlichen Freiraum 11 der Rampe 4 verstärkt und begrenzt, hat Verankerungselemente 12, die der Einbetonierung der Brückeneinfassung 9 dienen.

Die Bolzen 6 werden mittig von einem Auge 13 von Laschen 14 umschlossen, die an der Unterseite des Deckbleches 2 anliegen und sich unten auf einer Traverse 15 abstützen, deren Enden mit zwei Unterzügen 3 verschweisst sind. Diese Traverse 15 hat ein Gewindeloch 16 unterhalb eines wesentlich grösseren Durchbruches 17 in der Lasche 14. Die Lasche 14 hat zudem an ihrer Oberseite eine Vertiefung 18, deren Grund zur Auflage einer Scheibe 19 dient, die mittig mit einer Bohrung 2o versehen ist, die von einem Schraubbolzen 21 durchsetzt ist. Dieser Schraubbolzen 21 greift unten in das Gewindeloch 16 ein; demgemäss wird durch Anziehen des Schraubbolzens 21 die Lasche 14 zwischen der Scheibe 19 und der Traverse 17 fest eingeklemmt. Damit der Schraubbolzen 21 von oben her betätigt werden kann, hat das Deckblech 2 eine Durchbrechung 22.

Die Lasche 14 hat unterhalb ihres Auges 13 einen sich nach unten erstreckenden Vorsprung 23, der im wesentlichen hakenförmig gestaltet ist und einen quer zur Brücke verlaufenden Stab 24 erfassen kann, dessen Rücken an dem senkrechten Schenkel 9' der Brückeneinfassung 9 anliegt.

Nach dem Einbetonieren der Brückeneinfassung 9 werden die Bolzen 6 zusammen mit den Laschen 14 installiert. Damit diese eine montagegerechte Stellung einnehmen können, werden die Stäbe 24 eingesetzt. Dabei nehmen die Laschen 14 eine waagerechte Stellung ein, wobei jedoch auch geringe Abweichungen hiervon möglich sind. Alsdann wird die Brückenplatte 1 auf die Laschen 14 aufgeschoben, die eine taschenartige Vertiefung vorfinden, die oben durch das Deckblech 2 und unten durch die Traverse 16 begrenzt ist. Nach dem Einsetzen der Schraubbolzen 2o werden diese angezogen. Damit wird die Brückenplatte 1 fest mit den Laschen 14 verbunden. Vorher oder nach dem Anziehen der Schraubbolzen 2o können die Stäbe 24 entfernt werden, um die Arretierung der Laschen 14 aufzuheben.

Von besonderer Bedeutung ist, dass der Durchbruch 17 wesentlich grösser ist als der Querschnitt des Schraubbolzens 21. Damit wird es möglich, die Brückenplatte 1 vor dem Anziehen der Schraubbolzen 21 zur Seite hin oder in Längsrichtung zu verschieben, damit eine Justierung der Brückenplatte 1 erreicht werden kann.

Es sei erwähnt, dass die zum Einsetzen des Schraubbolzens 21 erforderlichen Durchbrechungen auch noch durch Bohren vorgesehen werden können, wenn die Justierung der Brückenplatte 1 vollzogen ist. Ggfs. kann auch das Gewinde für den Schraubbolzen noch nachgeschnitten werden. Wichtig ist aber in jedem Falle, dass die Brückenplatte 1 nach eingeführter Lasche 14 Verstellbewegungen der Brückenplatte 1 gegenüber der Lasche 14 zulässt und dass nach der Justierung eine Fixierung durchgeführt werden kann.

Um eine ausreichend feste Verbindung zwischen den Laschen 14 und der Brückenplatte 1 herbeiführen zu können, hat die Lasche 14 an ihrer Oberseite am Rand der Durchbrechung 17 kleine Vorsprünge 25, die beim Anziehen der Schraubbolzen 21 in die Scheibe 19 eindringen und so einen Formschluss herbeiführen.

Die Durchbrechung 22 kann im übrigen der Grösse des Kopfes des Schraubbolzens 21 angepasst sein, um so unnötige Durchbrüche im Deckblech 2 zu vermeiden.

## Patentansprüche

1. Überladebrücke für Rampen (4) mit einer rampenseitig um eine waagerechte Achse verschwenkbaren Brückenplatte (1) und einer am freien Ende der Brückenplatte ein- und ausfahrbar bzw. ein- und ausklappbar angeordneten Verlängerung (5) zur Abstützung auf der zu be- bzw. entladenden Plattform, wobei die Brückenplatte (1) an ihrem rampenseitigen Ende zur Bildung einer Gelenkstelle mit einer oder mehreren Laschen (14) versehen ist, deren Auge (13) einen die waagerechte Achse bildenden, an der Rampe (4) gelagerten Bolzen (6) umschliesst, dadurch gekennzeichnet, dass den Laschen (14) eine lösbare Sperre (23,24) zugeordnet ist, mit der die Laschen (14) für die Zeit der Montage der Brückenplate (1) in einer zumindest in etwa waagerechten Stellung arretierbar sind.

2. Brücke nach Anspruch 1, dadurch gekennzeichnet, dass die Brückenplatte (1) an ihrem rampenseitigen Ende mit einer taschenartigen Aufnahme für die Laschen (14) versehen ist.

3. Brücke nach Anspruch 2, dadurch gekennzeichnet, dass die Laschen (14) praktisch spielfrei zwischen einem Deckblech (2) der Brückenplatte (1) und einer Traverse (15) der Brückenplatte (1) angeordnet sind.

4. Brücke nach Anspruch 3, dadurch gekennzeichnet, dass die Enden der Traverse (15) mit Unterzügen (3) der Brückenplatte (1) fest verbunden sind.

5. Brücke nach Anspruch 1, dadurch gekennzeichnet, dass sich die Laschen (14) an ihrer Unterseite einen Vorsprung (23) aufweisen, der sich an einem entfernbaren Stab (24) abstützt, welcher an der Rampe (4) anliegt.

6. Brücke nach Anspruch 5, dadurch gekennzeichnet, dass der Vorsprung (23) hakenartig geformt ist und den Stab (24) in der arretierten Stellung der Laschen (14) erfasst.

7. Brücke nach Anspruch 1, dadurch gekennzeichnet, dass zur Befestigung der Laschen (14) an der Brückenplatte (1) eine Verschraubung (16,21) dient, die durch eine im Deckblech (2) der Brückenplatte (1) befindliche Durchbrechung (22) von der Oberseite der Brückeplatte (1) aus betätigbar ist.

8. Brücke nach einem oder mehreren vorhergehenden Ansprüchen, dadurch gekennzeichnet, dass zwei über die Brückenbreite verteilte Laschen (14) vorgesehen sind, denen je ein Bolzen (6) zugeordnet ist.

## Claims

1. Transfer bridge for platforms (4), having a bridge plate (1) which is pivotable at the platform end about a horizontal axis, and an extension member (5) which is disposed so as to be retractable and extendable or respectively inwardly pivotable and outwardly pivotable on the free end of the bridge plate for support on the platform to be loaded or unloaded, the bridge plate (1) being provided with one or more lugs (14) on its end facing the platform to form a pivotal location, the eyelet (13) of said lugs surrounding a pin (6), which forms the horizontal axis and is mounted on the platform (4), characterised in that a detachable closure (23,24) is associated with the lugs (14), and the lugs (14) are lockable by said closure in an at least substantially horizontal position for the period of time during which the bridge plate (1) is mounted.

2. Bridge according to claim 1, characterised in that the bridge plate (1) is provided on its end facing the platform with a pocket-like receiving means for the lugs (14).

3. Bridge according to claim 2, characterised in that the lugs (14) are disposed in a virtually clearance-free manner between a cover plate (2) of the bridge plate (1) and a cross-piece member (15) of the bridge plate (1).

4. Bridge according to claim 3, characterised in that the ends of the cross-piece member (15) are securely connected to support members (3) of the bridge plate (1).

5. Bridge according to claim 1, characterised in that the lugs (14) are provided, on their underside, with a projection member (23) supported on a removable bar (24), which abuts against the platform (4).

6. Bridge according to claim 5, characterised in that the projection member (23) has a hook-like configuration and grips the bar (24) when the lugs (14) are in their locked position.

7. Bridge according to claim 1, characterised in that a screw-connection (16,21) serves to secure the lugs (14) on the bridge plate (1), and said screw-connection is actuatable from the upper side of the bridge plate (1) through an opening (22) situated in the cover plate (2) of the bridge plate (1).

8. Bridge according to one or more of the preceding claims, characterised in that two lugs (14) are provided, which are distributed over the bridge width, a pin (6) being associated with each lug.

## Revendications

1. Niveleur de quai (4), comportant, côté quai, un tablier (1) basculant par rapport à un axe horizontal et un prolongement (5) monté à l'extrémité libre du tablier de manière à pouvoir le rentrer et le sortir ou le rabattre et le déployer, destiné à prendre appui sur la plate-forme à charger ou à décharger, le tablier (1) étant muni à son extrémité côté quai, en vue de former un point d'articulation, d'une ou de plusieurs attaches (14) dont l'oeillet (13) entoure un axe (6) formant l'axe (6) horizontal monté sur le quai (4), caractérisé en ce qu'il est associé aux attaches (14) un dispositif (23, 24) de blocage amovible, par lequel les attaches (14) peuvent être, pour la durée du montage du tablier (1), bloquées en une position au moins à peu près horizontale.

2. Niveleur de quai suivant la revendication 1, caractérisé en ce que le tablier (1) est muni à son extrémité côté quai d'un logement en forme de poche destiné aux attaches (14).

3. Niveleur de quai suivant la revendication 2, caractérisé en ce que les attaches (14) sont montées pratiquement sans jeu entre une tôle (2) de couverture du tablier (1) et une traverse 15 du tablier (1).

4. Niveleur de quai suivant la revendication 3, caractérisé en ce que les extrémités de la traverse (15) sont reliées rigidement à des sous-poutres (3) du tablier (1).

5. Niveleur de quai suivant la revendication 1, caractérisé en ce que les attaches (14) comportent sur leur face inférieure une partie (23) en saillie qui s'appuie sur un barreau (24) amovible qui s'applique au quai (4).

6. Niveleur de quai suivant la revendication 5, caractérisé en ce que la partie (23) en saillie est en forme de crochet et saisit le barreau (24) en la position bloquée des attaches (14).

7. Niveleur de quai suivant la revendication 1, caractérisé en ce que, pour fixer les attaches (14) au tablier (1), on utilise un vissage (16, 21) qui peut être actionné de la face supérieure du tablier (1), par un passage (22) ménagé dans la tôle (2) de couverture du tablier (1).

8. Niveleur de quai suivant une ou plusieurs des revendications précédentes, caractérisé en ce qu'il est prévu deux attaches (14) qui sont réparties sur la largeur du niveleur de quai et à chacune desquelles est associé un axe (6).
